# EUROPEAN PATENT SPECIFICATION

(11) **EP 1 073 554 B1**
(45) Date of publication and mention of the grant of the patent: **24.07.2002**
(21) Application number: 99939837.3
(22) Date of filing: 26.02.1999
(51) Int. Cl.: B29C 49/48, B29C 33/00, B29C 49/00

(54) **PRODUCTION OF HOLLOW ARTICLES**
HERSTELLUNG VON HOHLEN GEGENSTÄNDEN
PRODUCTION D'ARTICLES CREUX

(30) Priority: 26.02.1998 ZA 9801616
(43) Date of publication of application: 07.02.2001
(73) Proprietor: Lomold International Limited, Guernsey GY1 3HN (GB)
(72) Inventor: HUMAN, Jan, Petrus, Paarl 7646 (ZA)
(74) Representative: Hague, Alison Jane
(86) International application number: AP9900004
(87) International publication number: WO9947338

(56) References cited:
- US-A- 4 777 006
- US-A- 4 846 359

## Description

### FIELD OF THE INVENTION

THIS INVENTION relates to the production of hollow articles.

### BACKGROUND TO THE INVENTION

PET bottles are blow moulded. The procedure used involves the production of what is called a preform. The preform is injection moulded and has, in the neck region, an external shape which conforms to the shape of the bottle to be produced. The preform is hollow and generally has the shape of a test tube.

The second phase of the production procedure comprises placing the preform in a blow mould, the preform being gripped in the neck region. The preform is then heated and, once softened, air is blown into it so that it expands to the configuration of the mould.

A difficulty with the conventional production method is that PET bottles cannot, using the conventional method, be blown with handles.

The present invention seeks to overcome the above described deficiency in the method conventionally used to produce PET bottles. The method of the present invention is not, however, solely for the purpose of blowing bottles of PET but can be used with other synthetic plastics materials that can be blown and can produce shapes which are more complex than bottles with handles.

### BRIEF DESCRIPTION OF THE INVENTION

According to one aspect of the present invention there is provided a tool for use in moulding a hollow article, the tool comprising a plurality of individual components, means connecting said components together in a first relative relationship in which the components form a flexible string, and actuating means for displacing said components to a second relative relationship in which they abut one another and the string constituted by said components is rigid, said components returning to the first relative relationship upon deactivation of the actuating means.

According to another aspect of the present invention there is provided a tool which comprises a plurality of individual components and means for releasably interlocking the components into a relationship in which they abut one another and the tool is rigid in form, said components, when the interlocking means are released, being loosely held together and the tool being flexible in form.

According to yet another aspect of the present invention there is provided a method of moulding a hollow article which comprises placing a tool in an open preform mould, the tool comprising a plurality of individual components. means connecting said components together in a first relative relationship in which the components form a flexible string, the tool being placed in the mould whilst the components are in said first relative relationship, closing the mould to form a mould cavity, the tool being in said cavity, activating actuating means to displace said components to a second relative relationship in which they abut one another and the string constituted by said components is rigid, forcing mouldable material into the mould cavity so that it occupies that part of the mould cavity which is not occupied by the tool, permitting said material to set thereby to produce a preform, placing the preform in a blow mould, closing the blow mould, blowing the preform, deactivating the actuating means so that the tool reverts to the form of a flexible string, and withdrawing the tool from the hollow article.

According to a further aspect of the present invention there is provided a method of blow moulding a bottle having an open mouth which method comprises placing a tool in a preform mould which has protrusions which span across the mould, the tool comprising a plurality of individual components, releasably interlocking the components into a relationship in which they abut one another and form a rigid string, the protrusions passing between first and second limbs of the rigid string, forcing synthetic plastics material into the preform mould so as to form a hollow preform having a cylindrical wall and a hollow bridge spanning between opposed portions of the cylindrical wall, placing the preform and tool in a blow mould, blowing the preform, releasing said components so that they take the form of a flexible string, and withdrawing the tool from the bottle through said open mouth.

According to a still further aspect of the present invention there is provided a method of blow moulding a hollow structure having an opening in the walling thereof, the method comprising placing a tool in a preform mould, the tool comprising a plurality of individual components, releasably interlocking the components so that the tool takes on the form of a rigid string, forcing synthetic plastics material into said mould to form a preform with the tool within it, blowing the preform, releasing said components from one another so that the tool takes on the form of a flexible string whilst, however, the components remain interconnected, and withdrawing the tool from said component through said opening.

According to yet another aspect of the present invention there is provided a preform mould comprising surfaces bounding the outer periphery of the mould cavity, surfaces bounding a neck region which forms an entrance leading from externally of said mould to the mould cavity, and a bar extending across said mould cavity from one side thereof to the other whereby a preform produced in the mould as a transverse opening in it.

The present invention also provides, in combination, a preform mould comprising surfaces bounding the outer periphery of the mould cavity, surfaces bounding a neck region which forms an entrance leading from externally of said mould to the mould cavity, and a bar extending across said mould cavity from one side thereof to the other whereby a preform produced in the mould as a transverse opening in it, and a tool for use in moulding a hollow article, the tool comprising a plurality of individual components, means connecting said components together in a first relative relationship in which the components form a flexible string, and actuating means for displacing said components to a second relative relationship in which they abut one another and the string constituted by said components is rigid, said components returning to the first relative relationship upon deactivation of the actuating means, the tool entering the mould through said neck region, passing around said bar and emerging from the mould through said neck region.

### BRIEF DESCRIPTION OF THE DRAWINGS

For a better understanding of the present invention, and to show how the same may be carried into effect, reference will now be made, by way of example, to the accompanying drawings in which:-
Figure 1 diagrammatically illustrates a preform mould, a tool in accordance with the present invention and a preform;
Figure 2 is a diagrammatic cross-section illustrating a further tool in accordance with the present invention and part of a mould;
Figure 3 is a view of the direction of arrow A in Figure 2;
Figure 4 is an "exploded" pictorial view of the tool of Figure 2;
Figure 5 is a section through the assembled tool, Figure 5 being similar to Figure 3 but showing the tool in more detail;
Figure 6 is a top plan view of the tool of Figure 5;

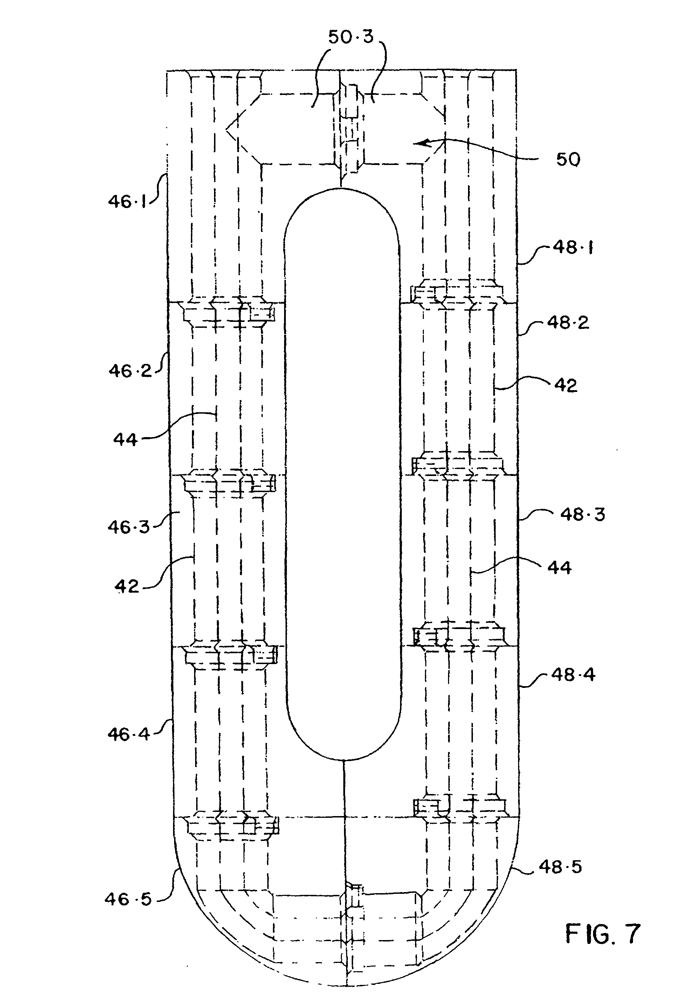

Figure 7 is a diagrammatic side elevation of the tool;
Figure 8 is a diagrammatic top plan view of the tool;
Figures 9 and 10 diagrammatically illustrate two components of the tool;
Figure 11 is an elevation of another tool;
Figure 12 is a top plan view of the tool of Figure 11;
Figure 13 illustrates a further method of interconnecting the components of a tool;
Figure 14 is a view of a component which comprises a number of segments;
Figure 15 is a plan view of the component of Figure 14;
Figure 16 is a section on the line XVI-XVI of Figure 15;
Figure 17 is a section of two components connected together by means of ball joints;
Figure 18 is a similar section showing components connected by pins; and
Figure 19 is a section through one of the components shown in Figure 18, the section being at right angles to the section of Figure 18.

### DETAILED DESCRIPTION OF THE DRAWINGS

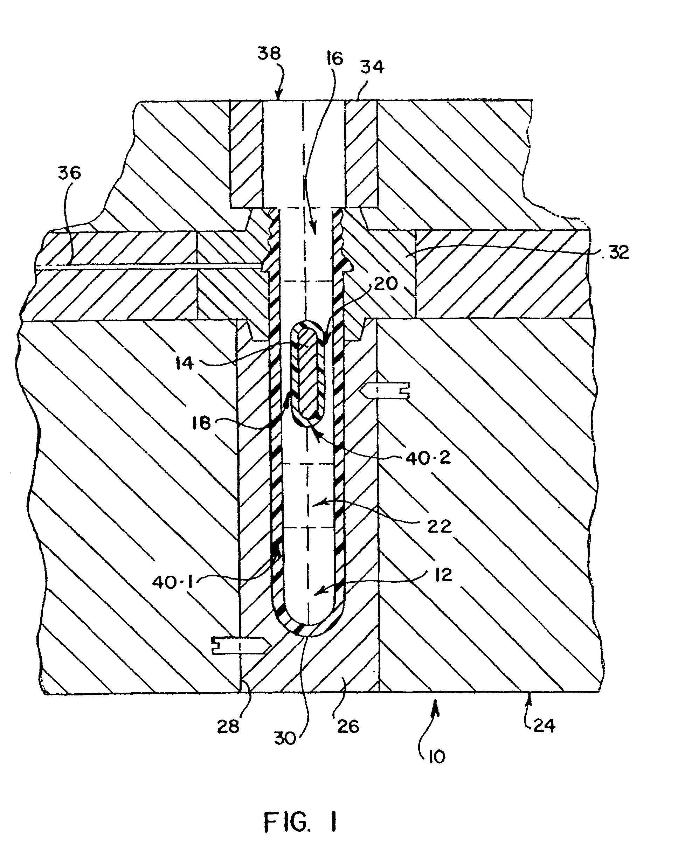

Referring firstly to Figure 1, the mould 10 illustrated comprises two mould halves with a split line between them. The split line is in the plane of the drawing and hence cannot be illustrated. Within the mould cavity designated 12 there is an elongate cross bar 14. Half the bar 14 is constituted by a protrusion carried by one mould half and the other half of the bar is constituted by a protrusion carried by the other mould half. When the mould is closed the protrusions bear on one another to form the bar. The mould cavity extends from a neck region 16, down one side of the bar 14 to form a first limb 18 of the mould cavity and down the other side of the bar 14 to form a second limb 20. The limbs 18, 20 are joined by a base portion 22 of the mould cavity.

The mould 10 comprises two cavity plates 24 only one of which can be seen in Figure 1. An insert 26 is mounted in a bore 28 of the cavity plate and the insert 26 defines one half of the external shape of the preform designated 30. The insert 26 which is not illustrated defines the other half of the external shape of the preform.

The insert 26 is extended by a split neck ring 32 which is internally grooved. The plastics material which enters these grooves eventually forms the threads and other neck features of the bottle into which the preform is blown. An openable and closable tool gripping chuck 34 forms an extension of the neck ring 32 on the opposite side thereof to the insert 26.

Cooling channels for the mould are diagrammatically shown at 36.

The tool 38 of the present invention extends through the chuck 34 and the neck ring 32, down both sides of the bar 14 through the limbs 18 and 20 of the cavity and beneath the bar 14 in the base portion 22 of the cavity. The end portion of the tool, that is, the portion in the chuck 34, seals-off the end of the cavity in which the preform is moulded by bearing on the ring 32. In the remaining Figures of the drawings only the portion of the tool 38 in the mould 10 and in the neck ring 32 is illustrated. The portion of the tool in the chuck 34 is constituted by two or more further components of the form to be described.

Between the tool 38 and the surfaces of the mould inserts 26 there is a gap 40.1. It will be understood from Figure 1 that the gap is of a generally hollow cylindrical shape with a hemispherical end. The gap can be, for example, 2mm wide. Between the tool 38 and the bar 14 there is also a gap, designated 40.2, which is about 2mm wide. The gap 40.2 which encircles the bar 14 is, at each end, in communication with diametrically opposed zones of the gap 40.1. When, as will be described subsequently, synthetic plastics material in molten form is forced into the mould, it fills these gaps to form the preform. The material in the gap around the bar 14 forms a hollow bridge joining diametrically opposed zones of the cylindrical part of the preform which lies in the gap 40.1 adjacent the inserts 26.

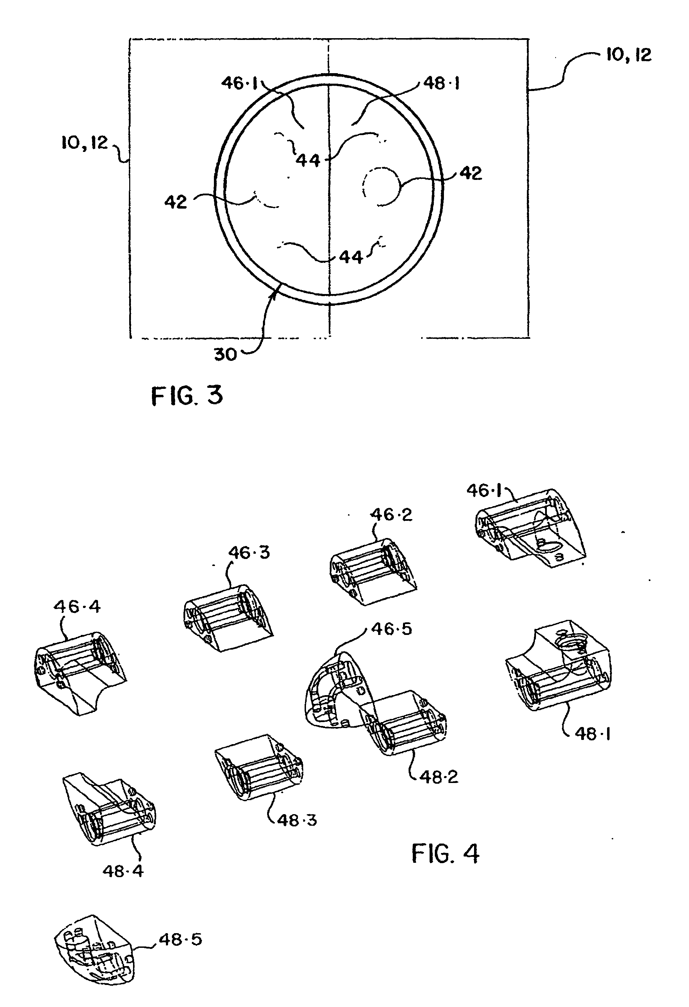

In Figure 3 the components of the tool have been shown simply as blocks. This is to permit their relationship to one another, to the gap which receives the preform, and to the mould, to be seen without being obscured by the constructional detail of each component.

The tool 38 has a main passageway 42 (see Figure 3) and two subsidiary passageways 44 all of which extend the full length of the tool. These will be described in more detail hereinafter.

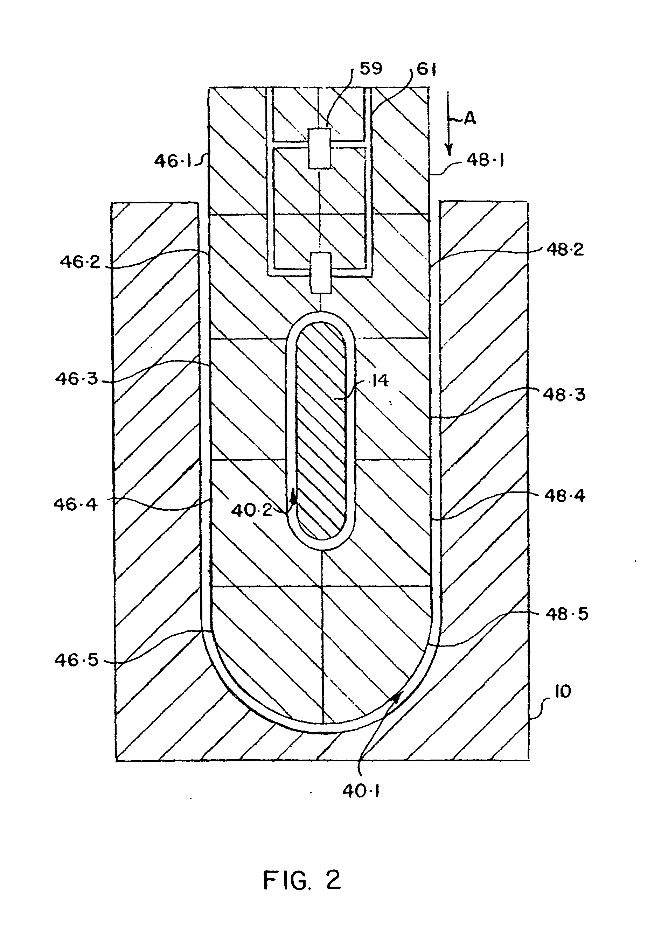

The tool 38 is composed of a number of individual components. In Figures 2 to 6 the tool is shown as having ten individual components. The components 46.1, 46.2, 46.3, 46.4 and 46.5 are all different to one another but are respectively mirror images of the components 48.1, 48.2, 48.3, 48.4 and 48.5. The two components which, in Figure 1, lie in the sleeve 34 are not shown.

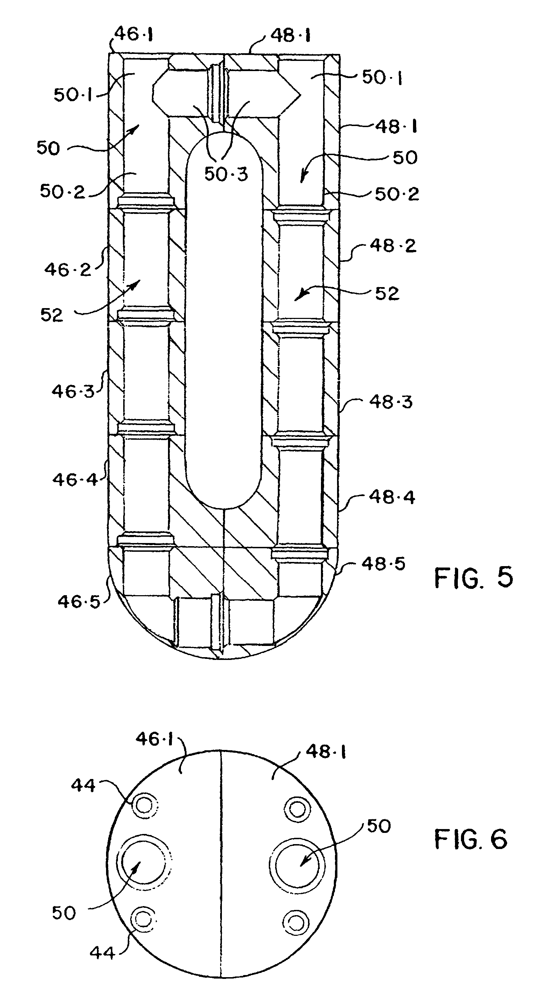

The components 46.1 and 48.1 each have a T-shaped passage 50 (see Figure 5) therein. The limb 50.1 of each passage can be connected to a source of vacuum or a source of air under pressure. The limbs 50.2 are connected to the straight through passages 52 of the components 46.2 and 48.2, and the limbs 50.3 communicate with one another.

Where the components 46.1, 48.1 abut there is a spigot and socket connection. For example, the component 48.1 can have a socket which encircles its passage 50.3 and the component 46.1 can have a spigot which fits into the socket of the component 48.1. Sealing means, such as an O-ring, can be provided for sealing between the spigot and socket. It is also possible to provide, on and in those faces of the components which abut, studs 56 and recesses 58 (not shown in Figures 5 and 6). These ensure that the components locate with respect to one another in the desired manner.

All the other individual components 46.2, 48.2 etc have similar passages, spigots, sprockets, recesses and studs and these will not be described in any further detail.

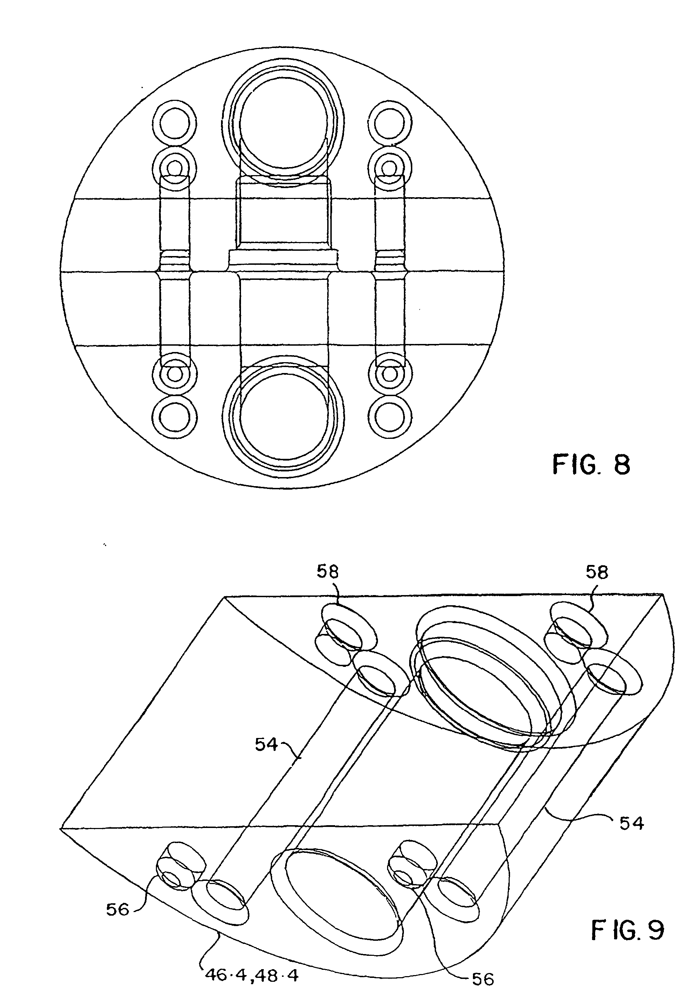

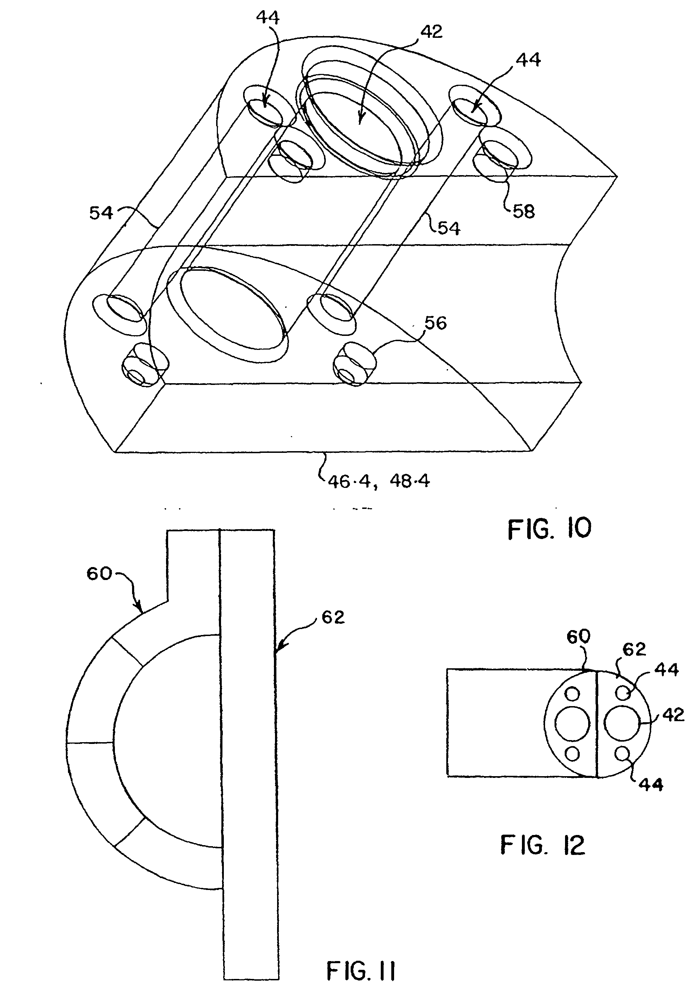

The outer faces of the components 46, 48 match the surfaces which bound the mould cavity. The inner faces of the components match the bar 14. The components 46.3, 48.3 are shown diagrammatically in Figure 9 and the components 46.4, 48.4 are shown diagrammatically in Figure 10.

As mentioned above, the tool also has two subsidiary passageways 44. As best seen in Figures 9 and 10, each component has therein two bores 54 which pass through it. Each bore 54 forms a part of one of the subsidiary passageways 44.

Cables (not shown) are anchored to one of the components in the sleeve 34, pass through the subsidiary passageways 44 constituted by the bores 54 and are attached to, for example, a winding drum which permits a pull to be exerted on the tool 30. If desired the passageways 44 can be omitted and a single cable can pass through the passageway 42.

In use the tool gripped in the chuck 34 is placed in the mould cavity of one of the mould halves as shown in Figure 1. The individual components of the tool are close to one another with the spigots and sockets adjacent and the studs and recesses adjacent. Suction is then applied to the main passageway 42 by way of suitable nozzles. The application of suction draws all the components together, the spigots entering the sockets and the studs 56 entering the recesses 58. If necessary the effect of suction can be supplemented by electromagnets 59 fitted to the components and supplied by electrical wires 61 passing through the components. This construction is shown diagrammatically in Figure 2. The tool takes on the form of a rigid string.

In a further form the components are held together by electromagnets without the use of suction.

The preform mould is then closed by urging the mould halves together and plastics material is injected. This can be done either at the base of the mould or, as shown, in the neck region. The synthetic plastics material injected into the mould fills the gaps between the tool and the mould resulting in a hollow preform with a hollow bridge spanning across it.

After the plastics material has solidified sufficiently to make the preform self supporting, the vacuum nozzles can be removed and/or power to the electro magnets cut off. Whilst the components are no longer held together it will be understood that there is no space in the preform for them to shift with respect to one another. The tool, however, takes on the form of a flexible string with the components all loosely connected to one another.

The preform mould is opened to release the preform, and the preform with the tool 38 in it is lowered into a cavity having the shape of the final bottle. This mould is then closed, heated and air is blown into the preform. The air preferably enters via the passageway 42. If this passageway is used as the air inlet it is necessary to arrange the O-rings so that they seal when vacuum is applied but permit air to flow outwardly when pressure is applied. The softened preform is expanded by the air under pressure to fill the blow mould cavity.

The blow mould includes protrusions, equivalent to the protrusions 18, 20, which pass through the hollow bridge of the preform. These protrusions can, as blowing proceeds, be pulled to one side thereby shifting the handle to a position close to the periphery of the bottle. If the means interlocking the components were not released when the preform solidified, they are released at this stage.

The cables passing through the tool are then used to pull the tool, which is now flexible and a loose fit in the blown bottle, out through the neck of the bottle.

If the components 46.2, 46.3 and 46.4 are made wider, and the components 48.2, 48.3 and 48.4 narrower, the hollow bridge can initially be offset to one side.

To enable a handle to be produced which protrudes from the side of the bottle, a tool as shown in Figures 11 and 12 can be used. This tool comprises a first row of components designated 60 and a second row of components, or a single elongate component, designated 62.

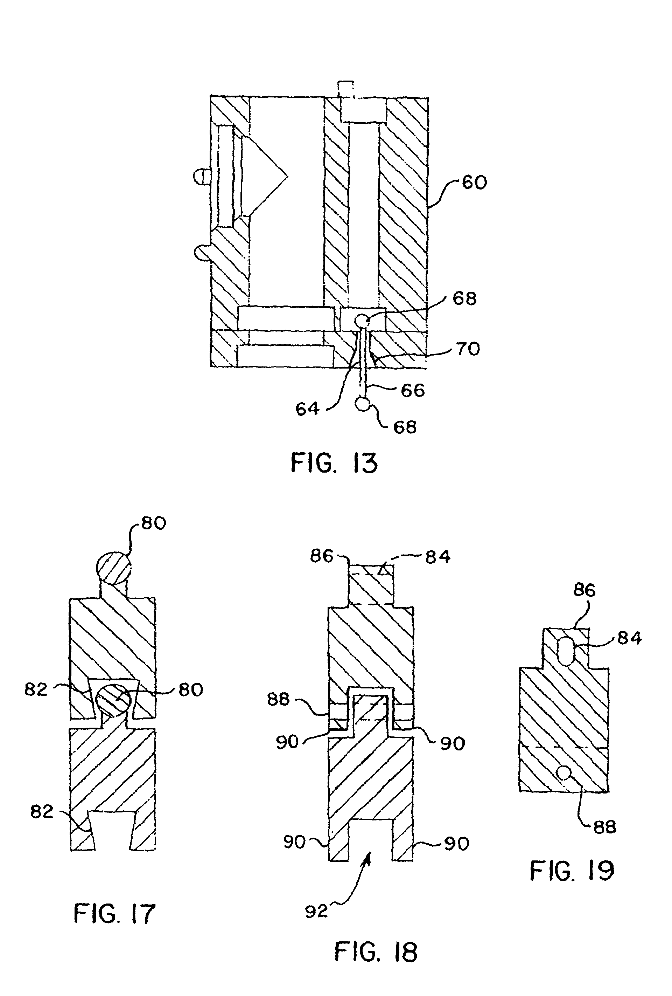

The cable described can be omitted and, as shown in Figure 13, each component connected to the adjacent component, or components, by a swivel 64 having its ends pivotal with respect to the adjacent components. The swivel 64 comprises a rod 66 with a ball 68 at each end. The rod 66 lies in a conical passage 70 which permits the swivel freedom to move with respect to the component. The swivel 64 permits the components to move between a juxtaposed position in which they abut and form a rigid string and a separated position in which the swivels link them into the form of a flexible string.

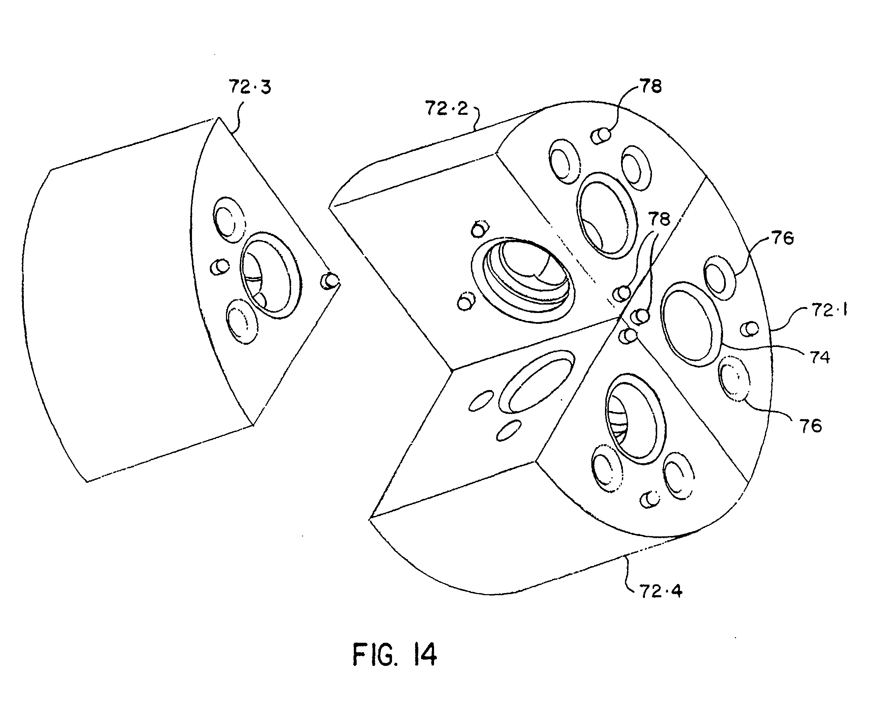

Turning now to Figure 14, the component illustrated comprises four segments 72.1, 72.2, 72.3 and 72.4. Each segment has a main passage 74 and two subsidiary passages 76 therethrough. It also has studs 56 protruding from the visible faces and co-operating recesses (not shown) on the other faces.

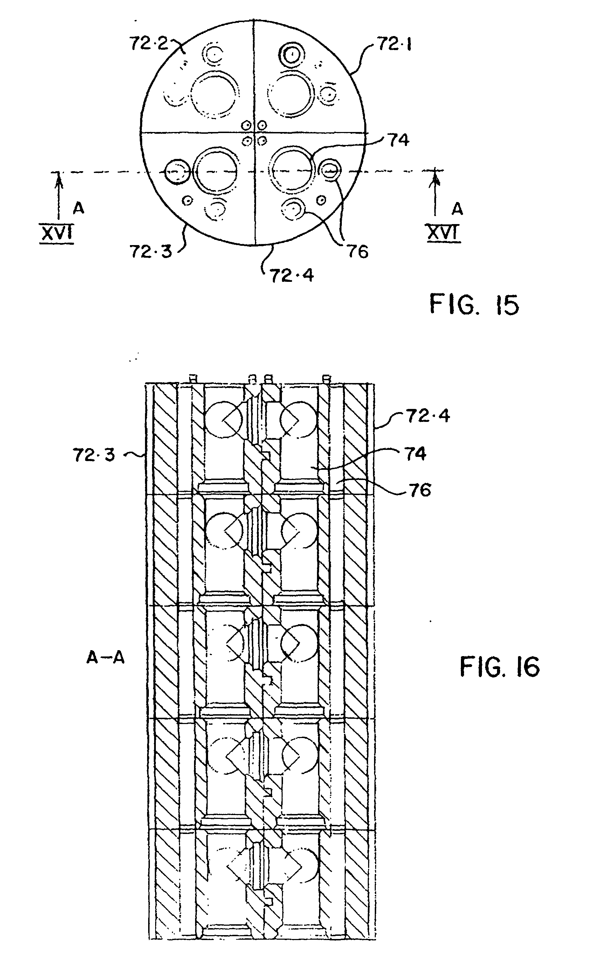

Figures 15 and 16 show a tool comprising five components, each constructed in the same way as the component of Figure 14.

In Figure 17 each component comprises a ball 80 and a dove-tail recess 82 which receives the ball of an adjacent component. Each ball is a loose fit in the recess in which it is received. When there is no force holding the components together, the balls and recesses connect the components in the form of a flexible string.

The structure of Figures 18 and 19 comprise components each of which has an elongate opening 84 in a lug 86 thereof and a hole 88 of circular section in each of the tines 90 of a fork 92.

The aligned holes 88 and openings 84 receive circular cross section pins (not shown). The pins, by moving along the openings 84, provide the requisite freedom of movement between the components whilst connecting them together as a flexible string.

The tools illustrated, because they can be pulled from the mould in either direction, can be used to form both internal and external undercuts on the article being produced.

## Claims

1. A tool (38) for use in moulding a hollow article, the tool (38) comprising a plurality of individual components (46, 48), means connecting said components (46, 48) together in a first relative relationship in which the components (46, 48) form a flexible string, and actuating means for displacing said components (46, 48) to a second relative relationship in which they abut one another and the string constituted by said components (46, 48) is rigid, said components (46, 48) returning to the first relative relationship upon deactivation of the actuating means.

2. A tool (38) as claimed in claim 1, and including a passage in each component (46, 48), the passages together forming a passageway (42) through the tool (38) when the components (46, 48) are in said second relative relationship.

3. A tool (38) as claimed in claim 1, and including electromagnets (59) which, when supplied with power, displace said components (46, 48) to said second relative position.

4. A tool (38) as claimed in claim 3, and including a passage in each component (46, 48), the passages together forming a passageway (42) through the tool (38) when the components (46, 48) are in said second relative relationship.

5. A tool (38) as claimed in any one of claims 1 to 4, wherein the means connecting the components (46, 48) together in the form of a flexible string comprise mechanical links spanning between the components (46, 48), there being free play between the links and the components (46, 48) thereby permitting the components (46, 48) of the tool to move between their first and second relative positions.

6. A tool (38) as claimed in claim 1, 2, 3 or 4, wherein said components (46, 48) include recesses (58) and studs (56), the studs (56) fitting in the recesses (58) when the components (46, 48) of the tool (38) are in said second relative position.

7. A tool (38) which comprises a plurality of individual components (46, 48) and means for releasably interlocking the components (46, 48) into a relationship in which they abut one another and the tool (38) is rigid in form, said components (46, 48), when the interlocking means are released, being loosely held together and the tool (38) being flexible in form.

8. A method of moulding a hollow article which comprises placing a tool (38) in an open preform mould (10), the tool comprising a plurality of individual components (46, 48), means connecting said components (46, 48), together in a first relative relationship in which the components (46, 48) form a flexible string, the tool (38) being placed in the mould (10) whilst the components (46, 48) are in said first relative relationship, closing the mould (10) to form a mould cavity (12), the tool (38) being in said cavity, activating actuating means to displace said components (46, 48) to a second relative relationship in which they abut one another and the string constituted by said components (46, 48) is rigid, forcing mouldable material into the mould cavity (12) so that it occupies that part of the mould cavity (12) which is not occupied by the tool (38), permitting said material to set thereby to produce a preform, placing the preform in a blow mould, closing the blow mould, blowing the preform, deactivating the actuating means so that the tool (38) reverts to the form of a flexible string, and withdrawing the tool (38) from the hollow article.

9. A method of blow moulding a bottle having an open mouth which method comprises placing a tool in a preform mould (10) which has protrusions which span across the mould, the tool (38) comprising a plurality of individual components (46, 48), releasably interlocking the components (46, 48) into a relationship in which they abut one another and form a rigid string, the protrusions passing between first and second limbs of the rigid string, forcing synthetic plastics material into the preform mould (10) so as to form a hollow preform having a cylindrical wall and a hollow bridge spanning between opposed portions of the cylindrical wall, placing the preform and tool in a blow mould, blowing the preform, releasing said components (46, 48) so that they take the form of a flexible string, and withdrawing the tool (38) from the bottle through said open mouth.

10. A method of blow moulding a hollow structure having an opening in the walling thereof, the method comprising placing a tool (38) in a preform mould (10), the tool comprising a plurality of individual components (46, 48), releasably interlocking the components so that the tool (38) takes on the form of a rigid string, forcing synthetic plastics material into said mould (10) to form a preform with the tool (38) within it, blowing the preform, releasing said components (46, 48) from one another so that the tool (38) takes on the form of a flexible string whilst, however, the components (46, 48) remain interconnected, and withdrawing the tool (38) from said hollow structure through said opening.

11. A preform mould (10) comprising surfaces bounding the outer periphery of the mould cavity, surfaces bounding a neck region which forms an entrance leading from externally of said mould (10) to the mould cavity (12), and a bar (14) extending across said mould cavity (12) from one side thereof to the other whereby a preform produced in the mould (10) has a transverse opening in it.

12. In combination a preform mould (10) comprising surfaces bounding the outer periphery of the mould cavity (12), surfaces bounding a neck region which forms an entrance leading from externally of said mould (10) to the mould cavity (12), and a bar (14) extending across said mould cavity (12) from one side thereof to the other whereby a preform produced in the mould (10) has a transverse opening in it, and a tool (38) for use in moulding a hollow article, the tool (38) comprising a plurality of individual components (46, 48), means connecting said components (46, 48) together in a first relative relationship in which the components (46, 48) form a flexible string, and actuating means for displacing said components (46, 48) to a second relative relationship in which they abut one another and the string constituted by said components (46, 48) is rigid, said components (46, 48) returning to the first relative relationship upon deactivation of the actuating means, the tool (38) entering the mould (10) through said neck region, passing around said bar (14) and emerging from the mould (10) through said neck region.

## Patentansprüche

1. Werkzeug (38) zum-Gießen eines hohlen Gegenstands, wobei das Werkzeug mehrere einzelne Komponenten (46, 48) umfasst, eine Einrichtung, die die Komponenten (46, 48) miteinander in einem ersten Verhältnis verbindet, in dem die Komponenten (46, 48) eine flexible Aneinanderreihung bilden, und eine Betätigungseinrichtung zum Verschieben der Komponenten (46, 48) in ein zweites Relativverhältnis, in dem sie gegeneinander stoßen und die Aneinanderreihung, die durch die Komponenten (46, 48) gebildet wird, starr ist, wobei die Komponenten (46, 48) in das erste Relativverhältnis bei der Deaktivierung der Betätigungseinrichtung zurückkehren.

2. Werkzeug (38) nach Anspruch 1, umfassend einen Durchlass in jeder Komponente (46, 48), wobei die Durchlässe zusammen einen Durchgang (42) durch das Werkzeug (38) bilden, wenn die Komponenten (46, 48) in dem zweiten relativen Verhältnis sind.

3. Werkzeug (38) nach Anspruch 1, umfassend Elektromagnete (59), die, wenn ihnen Strom zugeführt wird, die Komponenten (46, 48) in die zweite Relativposition verschieben.

4. Werkzeug (38) nach Anspruch 3, umfassend einen Durchlass in jeder Komponente (46, 48), wobei die Durchlässe zusammen einen Durchgang (42) durch das Werkzeug (38) bilden, wenn die Komponenten (46, 48) in dem zweiten Relativverhältnis sind.

5. Werkzeug (38) nach einem der Ansprüche 1 bis 4, wobei die Einrichtung, die die Komponenten (46, 48) miteinander in der Gestalt einer flexiblen Aneinanderreihung verbindet, mechanische Verbindungen umfasst, sich die zwischen den Komponenten (46, 48) erstrecken, wodurch die Komponenten (46, 48) des Werkzeugs sich zwischen ihrer ersten und zweiten Relativposition bewegen können.

6. Werkzeug (38) nach Anspruch 1, 2, 3 oder 4, wobei die Komponenten (46, 48) Aussparungen (58) und Knöpfe (56) umfassen, wobei die Knöpfe (56) in die Aussparungen (58) passen, wenn die Komponenten (46, 48) des Werkzeugs (38) in der zweiten Relativposition sind.

7. Werkzeug (38), das mehrere einzelne Komponenten (46, 48) umfasst und eine Einrichtung zum lösbaren Arretieren der Komponenten (46, 48) in einem Verhältnis, in dem sie gegeneinander stoßen, und wobei das Werkzeug (38) eine steife Form aufweist, wobei die Komponenten (46, 48), wenn die Arretiereinrichtung freigegeben ist, locker zusammengehalten werden und das Werkzeug (38) in der Gestalt flexibel ist.

8. Verfahren zum Gießen eines hohlen Gegenstands, das das Platzieren eines Werkzeugs (38) in einer offenen Vorform (10) umfasst, wobei das Werkzeug mehrere einzelne Komponenten (46, 48), eine Einrichtung zum Verbinden der Komponenten (46, 48) miteinander in einem ersten Relativverhältnis, in dem die Komponenten (46, 48) eine flexible Aneinanderreihung bilden, umfasst, wobei das Werkzeug (38) in der Form (10) platziert wird, wobei die Komponenten (46, 48) in dem ersten Relativverhältnis sind, das Schließen der Form (10), so dass eine Formvertiefung (12) gebildet wird, wobei das Werkzeug (38) in der Vertiefung ist, das Aktivieren von einer Betätigungseinrichtung zum Verschieben der Komponenten (46, 48) in ein zweites Relativverhältnis, in dem sie gegeneinander stoßen und die Aneinanderreihung, die durch die Komponenten (46, 48) gebildet wird, starr ist, dass Einpressen von gießbarem Material in die Formvertiefung (12), so dass es den Teil der Formvertiefung (12) einnimmt, der nicht durch das Werkzeug (38) eingenommen wird, das Festwerden lassen des Materials, so dass ein Rohling erzeugt wird, das Platzieren des Rohlings in einer Extrusionsblasform, das Schließen der Extrusionsblasform, das Vergrößern des Rohlings, das Deaktivieren der Betätigungseinrichtungen, so dass das Werkzeug (38) in die Gestalt einer flexiblen Aneinanderreihung zurückkehrt, und das Entnehmen des Werkzeugs (38) aus dem hohlen Gegenstand.

9. Verfahren zum Extrusionsblasgießen einer Flasche, die einen offenen Mund hat, wobei das Verfahren das Platzieren eines Werkzeugs in einer Vorform (10) umfasst, die Vorsprünge hat, die sich über die Form erstrecken, wobei das Werkzeug (38) mehrere einzelne Komponenten (46, 48) umfasst, das lösbare Arretieren der Komponenten (46, 48) in einem Verhältnis, in dem sie gegeneinander stoßen und eine starre Aneinanderreihung bilden, wobei die Vorsprünge zwischen ersten und zweiten Gliedern der starren Aneinanderreihung durchlaufen, das Einpressen von Kunststoffmaterial in die Vorform (10), so dass ein hohler Rohling mit einer zylindrischen Wand und einer hohlen Brücke geformt wird, die sich zwischen gegenüberliegenden Bereichen der zylindrischen Wand erstreckt, das Platzieren des Rohlings und des Werkzeugs in eine Blasform, das Aufblasen des Rohlings, das Freigeben der Komponenten (46, 48), so dass sie die Gestalt einer flexiblen Aneinanderreihung einnehmen, und das Entnehmen des Werkzeugs (38) aus der Flasche durch den offenen Mund.

10. Verfahren zum Blasformen einer hohlen Struktur mit einer Öffnung in ihrer Wandung, wobei das Verfahren das Platzieren eines Werkzeugs (38) in einer Vorform (10) umfasst, wobei das Werkzeug mehrere einzelne Komponenten (46, 48) umfasst, das lösbare Arretieren der Komponenten, so dass das Werkzeug (38) die Gestalt einer starren Aneinanderreihung einnimmt, das Eindrücken von Kunststoffmaterial in die Form (10) zum Bilden eines Rohlings, wobei das Werkzeug (38) in ihm ist, das Aufblasen des Rohlings, das Freigeben der Komponenten (46, 48) voneinander, so dass das Werkzeug (38) die Gestalt einer flexiblen Aneinanderreihung einnimmt, während jedoch die Komponenten (46, 48) verbunden bleiben, und das Entnehmen des Werkzeugs (38) aus der hohlen Struktur durch die Öffnung.

11. Vorform (10), umfassend Oberflächen, die den äußeren Rand der Formvertiefung begrenzen, Oberflächen, die einen Halsbereich begrenzen, der einen Eingang bildet, der von einem Außenbereich der Form (10) zur Formvertiefung (12) führt, und einen Balken (14), der sich über die Formvertiefung (12) von einer Seite davon zur anderen erstreckt, wobei ein Rohling, der in der Form (10) erzeugt wird, eine Queröffnung in ihm aufweist.

12. In Kombination eine Vorform (10), die Oberflächen umfasst, die den äußeren Rand der Formvertiefung (12) begrenzen, Oberflächen, die einen Halsbereich begrenzen, der einen Eingang bildet, der von einem Außenbereich der Form (10) zur Formvertiefung (12) führt, und einen Balken (14), der sich über die Formvertiefung (12) erstreckt von einer-Seite davon zur anderen, wobei ein Rohling, der in der Form (10) erzeugt wird, eine quer verlaufende Öffnung in ihm hat, und ein Werkzeug (38) zur Verwendung beim Formen eines hohlen Gegenstands, wobei das Werkzeug (38) mehrere einzelne Komponenten (46, 48) umfasst, eine Einrichtung, die die Komponenten (46, 48) miteinander in einem ersten Relativverhältnis miteinander verbindet, in dem die Komponenten (46, 48) eine flexible Aneinanderreihung bilden, und eine Betätigungseinrichtung zum Verschieben der Komponenten (46, 48) in ein zweites Relativverhältnis, in dem sie aneinander stoßen und die Aneinanderreihung, die durch die Komponenten (46, 48) gebildet wird, starr ist, wobei die Komponenten (46, 48) in das erste Relativverhältnis beim Deaktivieren der Betätigungseinrichtung zurückkehren, wobei das Werkzeug (38), das in die. Form. (10) durch den Halsbereich gelangt, um den Balken (14) verläuft und aus der Form (10) durch den Halsbereich austritt.

## Revendications

1. Outil (38) destiné à être utilisé pour mouler un article creux, l'outil (38) comportant une pluralité de composants individuels (46, 48), des moyens reliant ensemble lesdits composants (46, 48) dans une première disposition relative, dans laquelle les composants (46, 48) forment une tige souple, et des moyens d'actionnement pour déplacer lesdits composants (46, 48) vers une seconde disposition relative dans laquelle ils viennent en butée l'un contre l'autre et la ligne constituée par lesdits composants (46, 48) est rigide, lesdits composants (46, 48) revenant dans la première disposition relative lors de la désactivation des moyens d'actionnement.

2. Outil (38) selon la revendication 1, et comportant un passage dans chaque composant (46, 48), les passages réunis formant une voie de passage (42) à travers l'outil (38), lorsque les composants (46, 48) sont dans ladite seconde disposition relative.

3. Outil (38) selon la revendication 1, et comportant des électroaimants (59) qui, lorsqu'ils sont alimentés en courant, déplacent lesdits composants (46, 48) vers ladite seconde position relative.

4. Outil (38) selon la revendication 3, comportant un passage dans chaque composant (46, 48), les passages formant ensemble une voie de passage (42) à travers l'outil (38) lorsque les composants (46, 48) sont dans ladite seconde disposition relative.

5. Outil (38) selon l'une quelconque des revendications 1 à 4, dans lequel les moyens reliant les composants (46, 48) ensemble sous la forme d'une ligne souple comportent des liaisons mécaniques s'étendant entre les composants (46, 48), un jeu libre existant entre les liaisons et les composants (46, 48) permettant ainsi aux composants (46, 48) de l'outil de se déplacer entre leurs première et seconde positions relatives.

6. Outil (38) selon la revendication 1, 2, 3 ou 4, dans lequel lesdits composants (46, 48) comportent des évidements (58) et des goujons (56), les goujons (56) s'agençant dans les évidements (58) lorsque les composants (46, 48) et l'outil (38) sont dans ladite seconde position relative.

7. Outil (38) qui comporte une pluralité de composants individuels (46, 48) et des moyens pour bloquer mutuellement de manière libérable les composants (46, 48) dans une disposition dans laquelle ils viennent en butée les uns contre les autres et l'outil (38) a une forme rigide, lesdits composants (46, 48), lorsque les moyens de verrouillage mutuel sont libérés, étant maintenus ensemble de manière lâche et l'outil (38) ayant une forme souple.

8. Procédé de moulage d'un article creux qui consiste à placer un outil (38) dans un moule de préforme ouvert (10), l'outil comportant une pluralité de composants individuels (46, 48), des moyens reliant ensemble lesdits composants (46, 48) dans une première disposition relative dans laquelle les composants (46, 48) forment une ligne souple, l'outil (38) étant placé dans le moule (10) alors que les composants (46, 48) sont dans ladite première disposition relative, fermer le moule (10) pour former une cavité de moule (12), l'outil (38) étant dans ladite cavité, activer les moyens d'actionnement pour déplacer lesdits composants (46, 48) vers une seconde disposition relative dans laquelle ils viennent en butée les uns contre les autres et la bande constituée par lesdits composants (46, 48) est rigide, pousser du matériau pouvant être moulé dans la cavité de moule (12) de sorte qu'il occupe la partie de la cavité de moule (12) qui n'est pas occupée par l'outil (38), permettre audit matériau de durcir pour produire ainsi une préforme, placer la préforme dans un moule de soufflage, fermer le moule de soufflage, souffler la préforme, désactiver les moyens d'actionnement de sorte que l'outil (38) revienne à la forme d'une ligne souple, et retirer l'outil (38) de l'article creux.

9. Procédé de moulage par soufflage d'une bouteille ayant une embouchure ouverte, lequel procédé consiste à placer un outil dans un moule de préforme (10) qui a des saillies qui s'étendent à travers le moule, l'outil (38) comportant une pluralité de composants individuels (46, 48), verrouillent mutuellement de manière libérable les composants (46, 48) dans une disposition dans laquelle ils viennent en butée les uns contre les autres et forment une ligne rigide, les saillies passant entre des premier et second bras de la ligne rigide, pousser une matière plastique synthétique dans le moule de préforme (10) de manière à former une préforme creuse ayant une paroi cylindrique et un pont creux s'étendant entre des parties opposées de la paroi cylindrique, placer la préforme et l'outil dans un moule de soufflage, souffler la préforme, libérer lesdits composants (46, 48) de sorte qu'ils prennent la forme d'une ligne souple, et retirer l'outil (38) de la bouteille à travers ladite embouchure ouverte.

10. Procédé de moulage par soufflage d'une structure creuse ayant une ouverture dans sa paroi, le procédé consistant à placer un outil (38) dans un moule de préforme (10), l'outil comportant une pluralité de composants individuels (46, 48), verrouiller mutuellement de manière libérable les composants de sorte que l'outil (38) prenne la forme d'une ligne rigide, pousser de la matière plastique dans ledit moule (10) pour former une préforme, l'outil (38) étant dans celui-ci, souffler la préforme, libérer lesdits composants (46, 48) les uns des autres de sorte que l'outil (38) prend la forme d'une ligne souple alors que, cependant, les composants (46, 48) restent mutuellement reliés, et retirer l'outil (38) de ladite structure creuse à travers ladite ouverture.

11. Moule de préforme (10) comportant des surfaces délimitant la périphérie extérieure de la cavité de moule, des surfaces délimitant une zone de col qui forme une entrée partant de l'extérieur dudit moule (10) vers la cavité de moule (12), et une barre (14) s'étendant à travers ladite cavité de moule (10) depuis un côté de celle-ci vers l'autre de sorte qu'une préforme produite dans le moule (10) a une ouverture transversale dans celle-ci.

12. Combinaison d'un moule de préforme (10), comportant des surfaces délimitant la périphérie extérieure de la cavité de moule (12), des surfaces délimitant une zone de col qui forme une entrée partant de l'extérieur dudit moule (10) vers la cavité de moule (12), et une barre (14) s'étendant à travers ladite cavité de moule (12) depuis un côté de celle-ci vers l'autre, de sorte qu'une préforme produite dans le moule (10) a une ouverture transversale dans celle-ci, et un outil (38) destiné à être utilisé pour mouler un article creux, l'outil (38) comportant une pluralité de composants individuels (46, 48), des moyens reliant ensemble lesdits composants (46, 48) dans une première disposition relative dans laquelle les composants (46, 48) forment une ligne souple, et des moyens d'actionnement pour déplacer lesdits composants (46, 48) vers une seconde disposition relative dans laquelle ils sont en butée les uns avec les autres et la ligne constituée par lesdits composants (46, 48) est rigide, lesdits composants (46, 48) revenant dans la première disposition relative lors de la désactivation des moyens d'actionnement, l'outil (38) pénétrant dans le moule (10) à travers ladite zone de col, passant autour de ladite barre (14) et sortant du moule (10) à travers ladite zone de col.
